(19) Europäisches Patentamt
European Patent Office
Office européen des brevets

(11) **EP 3 820 142 A1**

(12) **EUROPEAN PATENT APPLICATION**
published in accordance with Art. 153(4) EPC

(43) Date of publication:
**12.05.2021 Bulletin 2021/19**

(51) Int Cl.:
***H04N 5/235*** (2006.01)

(21) Application number: **19934377.3**

(86) International application number:
**PCT/CN2019/100597**

(22) Date of filing: **14.08.2019**

(87) International publication number:
**WO 2021/026822 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SZ DJI Technology Co., Ltd.**
**Shenzhen, Guangdong 518057 (CN)**

(72) Inventors:
• **LI, Guang**
  **Guangdong 518057 (CN)**
• **LI, Jing**
  **Guangdong 518057 (CN)**
• **GUO, Haoming**
  **Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **IMAGE PROCESSING METHOD AND APPARATUS, IMAGE PHOTOGRAPHING DEVICE, AND MOBILE TERMINAL**

(57) Embodiments of this application provide an image processing method and device, an image capture apparatus, and a mobile terminal. The method includes: decomposing a to-be-processed images to obtain two or more layers with different frequency bands; determining exposure compensation parameters of each layer, and performing exposure compensation processing on each layer based on the exposure compensation parameters; and performing image reconstruction based on the layers receiving the exposure compensation processing, so as to obtain a target image. In the method, smoother exposure compensation can be globally performed for images, so that brightness differences of the images can be globally aligned, thereby greatly improving the image quality.

EP 3 820 142 A1

Decompose a to-be-processed image to obtain two or more layers with different frequency bands — S101

Determine exposure compensation parameters of each layer, and performing exposure compensation processing on each layer by using the exposure compensation parameters — S102

Perform image reconstruction based on the layers receiving the exposure compensation processing to obtain a target image — S103

FIG. 1

**Description**

TECHNICAL FIELD

Embodiments of this application relate to computer technologies, and in particular, to an image processing method and device, an image capture apparatus, and a mobile terminal.

BACKGROUND

Currently, some imaging apparatuses support capturing panoramic images. A panoramic image is created by stitching together multiple images captured from different angles, and fusing these images into one large-field-of-view or 360-degree full-field-of-view image. Because a panoramic image may be captured from different angles, a panoramic image may involve front lighting, back lighting, sky, ground, and other scenes at the same time. Exposure values required for these scenes may be different, while the panoramic image needs to meet the requirements of smooth stitching of image brightness and consistency of image subject brightness.

In the existing technologies, to meet the requirements of smooth stitching of image brightness and consistency of image subject brightness in a panoramic image, the panoramic image may be captured in a locked exposure manner. In the locked exposure manner, a same exposure value is used for all images forming the panoramic image.

However, this method in the existing technologies may cause the issue of overexposure or underexposure in some scenes in a panoramic image, resulting in poor image quality of the panoramic image.

SUMMARY

Embodiments of this application provide an image processing method and device, an image capture apparatus, and a mobile terminal, to improve image quality of a panoramic image.

According to a first aspect, an embodiment of this application provides an image processing method. The method includes: decomposing a to-be-processed image, to obtain two or more layers with different frequency bands; determining exposure compensation parameters of each layer, and performing exposure compensation processing on each layer by using the exposure compensation parameters; and performing image reconstruction on the layers on which exposure compensation processing has been performed, to obtain a target image.

In the method, the images are decomposed into layers with different frequency bands, exposure compensation processing is performed on each layer by using the exposure compensation parameters of the layer, and image reconstruction is performed on the compensated layers. In the method, smoother exposure compensation can be performed for global images, so that brightness differences of the global images can be aligned, thereby greatly improving image capture quality.

According to a second aspect, an embodiment of this application provides an image processing device, including:

a decomposition module, configured to decompose a to-be-processed image to obtain two or more layers with different frequency bands;

a determining module, configured to determine exposure compensation parameters of each layer, and perform exposure compensation processing on each layer by using the exposure compensation parameters; and

a reconstruction module, configured to perform image reconstruction on the layers on which exposure compensation processing has been performed, to obtain a target image.

According to a third aspect, an embodiment of this application provides an image capture apparatus, including:

a memory, configured to store a computer program; and

a processor, configured to execute the computer program, to perform the following operations:

decomposing a to-be-processed image to obtain two or more layers with different frequency bands;

determining exposure compensation parameters of each layer, and performing exposure compensation processing on each layer by using the exposure compensation parameters; and

performing image reconstruction on the layers on which exposure compensation processing has been performed, to obtain a target image.

According to a fourth aspect, an embodiment of this application provides a mobile terminal, including

a body; and

an image capture apparatus, where the image capture apparatus is mounted on the body; and

the image capture apparatus includes:
a memory, configured to store a computer program; and
a processor, configured to execute the computer program, to perform the following operations:

decomposing a to-be-processed image to obtain two or more layers with different frequency bands;
determining exposure compensation parameters of each layer, and performing exposure compensation processing on each layer by using the exposure compensation parameters; and
performing image reconstruction on the layers on which exposure compensation processing has been performed, to obtain a target image.

According to a fifth aspect, an embodiment of this application provides a computer readable storage medium, including a program or an instruction, where when the program or the instruction is run on a computer, the following operations are performed:

decomposing a to-be-processed image to obtain two or more layers with different frequency bands;
determining exposure compensation parameters of each layer, and performing exposure compensation processing on each layer by using the exposure compensation parameters; and
performing image reconstruction on the layers on which exposure compensation processing has been performed, to obtain a target image.

According to the image processing method and device, the image capture apparatus, and the mobile terminal that are provided in the embodiments of this application, the images are decomposed into layers with different frequency bands, exposure compensation processing is performed on each layer by using the exposure compensation parameters of the layer, and image reconstruction is performed on the compensated layers. In the method, smooth exposure compensation can be globally performed for images, so that brightness differences of the images can be globally aligned, thereby greatly improving the image quality.

BRIEF DESCRIPTION OF THE DRAWINGS

To describe the technical solutions in the present invention or in the existing technologies more clearly, the following briefly describes the accompanying drawings for describing the embodiments or the existing technologies. Apparently, the accompanying drawings in the following description show some embodiments of the present invention, and a person of ordinary skill in the art may still derive other drawings from these accompanying drawings without creative efforts.

FIG. 1 is a schematic flowchart of an image processing method according to an embodiment of this application.
FIG. 2 is a schematic flowchart of an image processing method according to an embodiment of this application.
FIG. 3 is a schematic processing diagram of obtaining a panoramic image based on an embodiment of this application.
FIG. 4 is a structural diagram of modules of an image processing device according to an embodiment of this application.
FIG. 5 is a structural diagram of modules of an image processing device according to an embodiment of this application.
FIG. 6 is a schematic structural diagram of an image capture apparatus according to an embodiment of this application.
FIG. 7 is a schematic structural diagram of a mobile terminal according to an embodiment of this application.

DETAILED DESCRIPTION

To make the objects, technical solutions, and advantages of the present invention clearer, the following clearly and fully describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the scope of protection of the present invention.

The embodiments of this application provide an image processing method. In the method, an image(s) is decomposed into various layers of different frequency bands, exposure compensation processing is then performed on each layer by using exposure compensation parameters of the layer, and image reconstruction is performed on the compensated layers. In the method, smoother exposure compensation can be performed globally for the image, so that brightness differences of the global image can be aligned, thereby greatly improving the image quality.

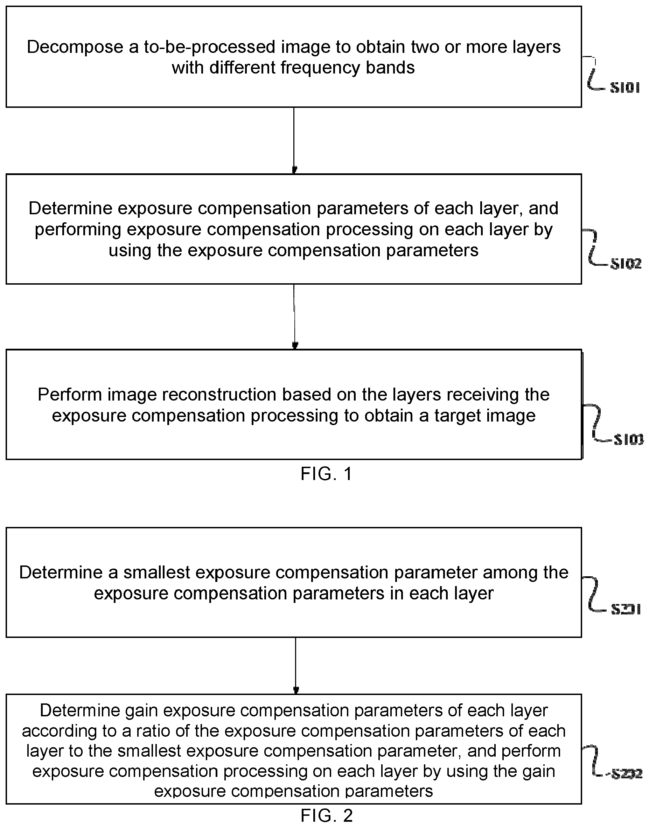

FIG. 1 is a schematic flowchart of an image processing method according to an embodiment of this application. The method may be performed by any electronic apparatus having an image processing capability. As shown in FIG. 1, the method includes the following steps.

S101: Decompose a to-be-processed image, to obtain two or more layers with different frequency bands.

There may be a single to-be-processed image, that is, a single image is decomposed to obtain two or more layers with different frequency bands, and then different exposure compensation processing is performed on different areas of the single image. Optionally, the method of this embodiment of this application is also applicable to a scenario where a panoramic image is processed. In this scenario, an imaging apparatus captures images separately from various angles to obtain multiple images. The multiple images are the to-be-processed image in this step, that is, each of the multiple images is decomposed based on frequency bands to obtain two or more layers with different frequency bands.

It should be noted that, a same quantity of layers are obtained by decomposing each of the multiple images, and each layer corresponds to a same frequency band.

Optionally, in the panoramic image processing scenario, there needs to be an overlapping area between every two adjacent images captured by the imaging apparatus, so as to complete panoramic fusion. Therefore, the to-be-processed image is a plurality of images, where every two adjacent images have an overlapping area.

In an example, specifically, the foregoing decomposition based on frequency bands may be Laplacian decomposition or Gaussian decomposition. Through Laplacian decomposition or Gaussian decomposition, an image may be decomposed to different frequency bands, and each frequency band corresponds to one layer.

In this step, each of the multiple images is decomposed through Laplacian decomposition or Gaussian decomposition, to obtain multiple layers, and each layer includes multiple images corresponding to each image in a corresponding frequency band of the layer. Through this pre-processing, decomposition results of the images may be aligned to the corresponding frequency bands, so as to prepare for exposure compensation processing to be performed on each layer in a next step.

S102: Determine exposure compensation parameters of each layer, and perform exposure compensation processing on each layer by using the exposure compensation parameters.

After the to-be-processed image is decomposed into the layers with different frequency bands, an exposure compensation parameter may be determined for each layer, so that images in various layers would have their respective exposure compensation parameters, and exposure compensation processing is then performed on each layer based on these exposure compensation parameters. Instead of performing unified exposure compensation or unified exposure value adjustment on a whole to-be-processed image, respective exposure compensation parameters are determined for the layers and exposure compensation processing is separately performed on each of the layers. In this way, dark or bright parts of an image can be separately enhanced to prevent local overexposure or over-darkness, and avoid issues such as whitening and detail loss in a photo, thereby brining better viewing experience.

S103: Perform image reconstruction on the layers on which exposure compensation processing has been performed, to obtain a target image.

For example, in the scenario of panoramic image processing, the imaging apparatus captures multiple images. After exposure compensation is performed on layers obtained by decomposing the multiple images in the foregoing step, the images on which exposure compensation has been performed may be reconstructed to obtain a complete panoramic image.

During image processing, when unified exposure compensation or unified exposure value adjustment is performed on the whole to-be-processed image, if overexposure occurs, the image cannot be restored in a later stage, and inpainting needs to be performed, or if underexposure occurs, a lot of details may be lost. Therefore, in this embodiment, the images are decomposed into layers with different frequency bands, exposure compensation processing is then performed on each layer based on the exposure compensation parameters of the respective layers, and image reconstruction is next performed on the compensated layers. In the method, smoother exposure compensation can be globally performed for images, so that brightness differences of the images can be globally aligned, thereby greatly improving the image quality.

In an optional implementation, the foregoing step S102 of determining exposure compensation parameters of each layer may be performed in any of the following methods.

In a first manner, exposure compensation parameters of a first intermediate image are determined based on a quantity of pixels in an overlapping area between the first intermediate image and a second intermediate image and average information of pixel values of the overlapping area.

In a second manner, exposure compensation parameters of a first intermediate image are determined based on a quantity of pixels in an overlapping area between the first intermediate image and a second intermediate image, average information of pixel values of the overlapping area, a standard deviation of an error, and a standard deviation of a gain.

The first intermediate image and the second intermediate image in the foregoing two manners are any two intermediate images in a same layer that share an overlapping area.

In the first manner, when local exposure conditions of the to-be-processed image are not much different, this method can effectively save processing resources, and ensure an overall exposure compensation effect. In the second manner, by means of statistical collection on fluctuation ranges of error within a specific period of time and statistical collection on degrees of dispersion of gain data, a better compensation effect can be achieved for to-be-processed image with large differences in exposure conditions in different areas, and specific details can be retained as many as possible while individual requirements of image processing are met.

After exposure compensation parameters of images in a layer are obtained, these exposure compensation parameters may be used as the exposure compensation parameters of this layer.

Optionally, in the foregoing two manners, the quantity of the pixels in the overlapping area between the first intermediate image and the second intermediate image may be obtained by traversing and counting the pixels in the overlapping area. Through the method, an optimal exposure parameter(s) of the intermediate image can be obtained.

Optionally, in the foregoing two manners, the average information of pixel values of the overlapping area may include a mean Euclidean distance of all pixel values in the overlapping area, or may include a mean value of all pixel values in the overlapping area and a mean-square error (MSE) of all the pixel values in the overlapping area. By making the average information of the pixel values of the overlapping area include a mean Euclidean distance of all pixel values in the overlapping area, the exposure compensation parameters may be obtained based on data close to the reality. By making the average information of the pixel values of the overlapping area include a mean value of all pixel values in the overlapping area and a mean-square error of all pixel values in the overlapping area, the manner of processing the average information of the pixel values of the overlapping area can be further improved, so as to avoid the impact of relatively large error values. Specifically, for example, the decomposition manner is Laplacian decomposition. In this case, the to-be-processed images may be decomposed into a Laplacian pyramid, and each layer of the pyramid corresponds to one frequency band. For each layer other than the highest layer, the average information of the pixel values of the overlapping area may include a mean Euclidean distance of all the pixel values in the overlapping area, and exposure compensation parameters of images in each layer are calculated based on the mean Euclidean distance. The highest layer of the pyramid is a Gaussian layer. For the highest layer, the average information of the pixel values of the overlapping area may include a mean value and a mean square error of all the pixel values in the overlapping area, and exposure compensation parameters of images in this Gaussian layer are calculated based on the mean value and the mean square error.

Optionally, in the case where the average information of the pixel values of the overlapping area includes a mean value of all pixel values in the overlapping area and a mean square error of all the pixel values in the overlapping area, two exposure compensation parameters may be calculated based on the mean value and the mean square error. For easy distinction, an exposure compensation parameter obtained based on the mean value is referred to as a first exposure compensation parameter, and an exposure compensation parameter obtained based on the mean square error is referred to as a second exposure compensation parameter. Further, exposure compensation may be performed on various layers based on the first exposure compensation parameter and the second exposure compensation parameter.

For example, a mean value of the first exposure compensation parameter and the second exposure compensation parameter may be obtained, and exposure compensation is then performed based on this mean value. Alternatively, the first exposure compensation parameter and the second exposure compensation parameter may be separately weighted, results of the weighted calculation are summed, and exposure compensation is performed based on a sum of the results.

In an optional implementation, the decomposition manner of this embodiment of this application may alternatively be a manner based on alternating current/direct current (AC/DC) decomposition. In this decomposition manner, the to-be-processed images may be decomposed into two layers: an image DC component layer and an image AC component layer. In this case, the second manner mentioned above may be employed to determine the exposure compensation parameters of intermediate images in each layer. Exposure compensation parameters of each image in the DC component layer may be calculated based on a mean value and a standard mean-square error of all pixels in each overlapping area of intermediate images in the DC component layer, so as to obtain exposure compensation parameters of the DC component layer. In addition, exposure compensation parameters of the AC component layer may be obtained based on a mean value and a standard mean-square error of all pixels in each overlapping area of intermediate images in the AC component layer. Further, during compensation processing, the images in the DC component layer may be multiplied by the exposure compensation parameters of the DC component layer, the images in the AC component layer may be multiplied by the exposure compensation parameters of the AC component layer, and then results of the multiplication are integrated into one image.

The decomposition manner based on AC/DC decomposition may be regarded as a simplified manner or a degraded solution of this application. In this manner, images do not need to be decomposed into multiple layers, or Laplacian decomposition does not need to be performed on images in the exposure compensation stage. In addition, the compensation parameters in statistical collection and calculation are fewer, yet a compensation effect close to one in a full solution can be achieved in certain specific scenarios, so that processing resources can be effectively saved. In an optional implementation, after the exposure compensation parameters are obtained through the foregoing process, the exposure compensation parameters may be processed, to generate gain exposure compensation parameter(s) greater than or equal to 1, and then exposure compensation processing is performed on each layer based on the gain exposure compensation parameter(s).

FIG. 2 is a schematic flowchart of an image processing method according to an embodiment of this application. As shown in FIG. 2, a process of processing exposure compensation parameters and performing exposure compensation includes the following steps.

S201: Determine a smallest exposure compensation parameter among the exposure compensation parameters in each layer.

S202: Determine gain exposure compensation parameters of each layer according to a ratio of the exposure compensation parameters of each layer to the smallest exposure compensation parameter, and perform exposure compensation processing on each layer by using the gain exposure compensation parameters.

For example, the foregoing process may be obtained by using the following formula (1) and formula (2):

$$\text{min\_gain} = \min(g1{-}1, g1{-}2, \ldots, g1{-}n, g2{-}1, g2{-}2, \ldots, g2{-}n, \ldots gm{-}1, \ldots gm{-}n) \ (1)$$

$$gi - j = gi - j/\text{min\_gain} \ (2)$$

where m is a quantity of layers obtained by decomposing the to-be-processed images, and n is a quantity of intermediate images in a layer m. For example, g2-1 represents a first image in a layer 2, g2-2 represents a second image in the layer 2, and so on.

A smallest exposure compensation parameter among the exposure compensation parameters of each layer is calculated according to formula (1). Subsequently, a ratio of the exposure compensation parameters of each intermediate image in each layer to the smallest exposure compensation parameter is calculated according to formula (2), to obtain gain exposure compensation parameters of each intermediate image in each layer, and then exposure compensation processing is performed on each layer based on the gain exposure compensation parameters.

After the exposure compensation parameters are processed in the foregoing process, high dynamic ranges can be retained without compressing image information, and an image bit width is expanded. Whether to compress image information may be selected in post-processing as needed.

Optionally, the foregoing step S103 of performing image reconstruction on the layers on which exposure compensation processing has been performed, so as to obtain a target image may be performed in any of the following two manners.

In a first manner, image reconstruction is performed on the layers, on which exposure compensation has been performed, of each image, and then image fusion is performed on reconstructed images.

In an example where the decomposition manner is a Laplacian decomposition, multiple to-be-processed images are separately decomposed into multiple layers, and each layer corresponds to one frequency band. For a to-be-processed image, each layer includes an image with a specific frequency band. After the foregoing processing, the image of each layer has exposure compensation parameters. After exposure compensation processing is performed on the image of each layer, the images of the layers are reconstructed, to obtain a reconstructed to-be-processed image. After the multiple to-be-processed images are reconstructed, image fusion is performed on the multiple reconstructed to-be-processed images, so as to obtain a panoramic image.

In a second manner, when multi-band fusion is used in a fusion algorithm, layers of different frequency bands after exposure processing may be fused first, and then image reconstruction is performed.

In an example where the decomposition manner is a Laplacian decomposition, multiple to-be-processed images are separately decomposed into multiple layers, each layer corresponds to one frequency band, and each layer includes multiple intermediate images of the multiple to-be-processed images in the corresponding frequency bands. In this manner, image fusion is performed first on intermediate images that belong to a same layer, and a fused image may be obtained for each layer. Then, image reconstruction is performed on the fused image in each layer, so as to obtain a panoramic image.

The target image obtained through the foregoing embodiments is a panoramic image with a high bit width. Such processing can preserve data information and a high dynamic range of the image. In related technologies, a panoramic image is an image with a low bit width.

In an optional implementation, after the reconstructed target image is obtained, the target image may be converted from a first bit width to a second bit width, where the second bit width is less than the first bit width.

The target image obtained through the foregoing embodiment may be a panoramic image with a high bit width, and some bit widths of a display screen are low bit widths. Accordingly, conversion of the target image from the high bit width into the low bit width can allow the display screen to display the panoramic image normally.

Optionally, the foregoing target image may be converted from the first bit width to the second bit width through tone mapping.

For example, a tone mapping method may be a local algorithm, a global algorithm, or the like. The manner of tone mapping is not limited in this embodiment of this application. Through tone mapping, human vision can be used as a reference to retain more details in a high bit width image to a low-bit width image.

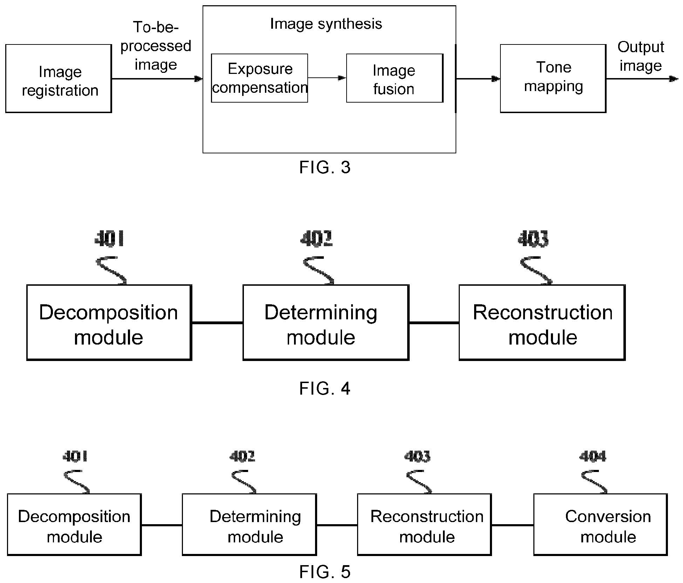

FIG. 3 is a schematic processing diagram of obtaining a panoramic image based on an embodiment of this application. As shown in FIG. 3, a process of photographing and obtaining a panoramic image may include in sequence: image registration, image synthesis, and tone mapping. During image registration, an image capture apparatus can perform image registration on images captured from different angles, to obtain the to-be-processed images. Specifically, the image capture apparatus separately extracts feature points of the images captured from the different angles, and performs feature point matching on the feature points of the images captured from the angles, so as to obtain multiple to-be-processed images. Optionally, the image capture apparatus may further perform distortion correction on images, to obtain corrected images, and perform image registration based on the corrected images. In the image synthesis stage, exposure compensation and image fusion are separately performed on the to-be-processed images in the foregoing manners. For a specific process, reference may be made to the foregoing embodiments. Details will not be described herein again. In the tone mapping stage, an image with a high bit width obtained through image fusion may be mapped to an image with a low bit width, and the image with the low bit width is then used as an output image.

FIG. 4 is a structural diagram of modules of an image processing device according to an embodiment of this application. As shown in FIG. 4, the device includes:

a decomposition module 401, configured to decompose to-be-processed images, so as to obtain two or more layers with different frequency bands;
a determining module 402, configured to determine exposure compensation parameters of each layer, and perform exposure compensation processing on each layer by using the exposure compensation parameters; and
a reconstruction module 403, configured to perform image reconstruction on the layers on which the exposure compensation processing has been performed, so as to obtain a target image.

FIG. 5 is a structural diagram of modules of an image processing device according to an embodiment of this application. As shown in FIG. 5, the device further includes:
a conversion module 404, configured to convert the target image from a first bit width to a second bit width, where the second bit width is less than the first bit width.

In an optional implementation, the conversion module 404 is specifically configured to:
convert the target image from the first bit width to the second bit width through tone mapping.

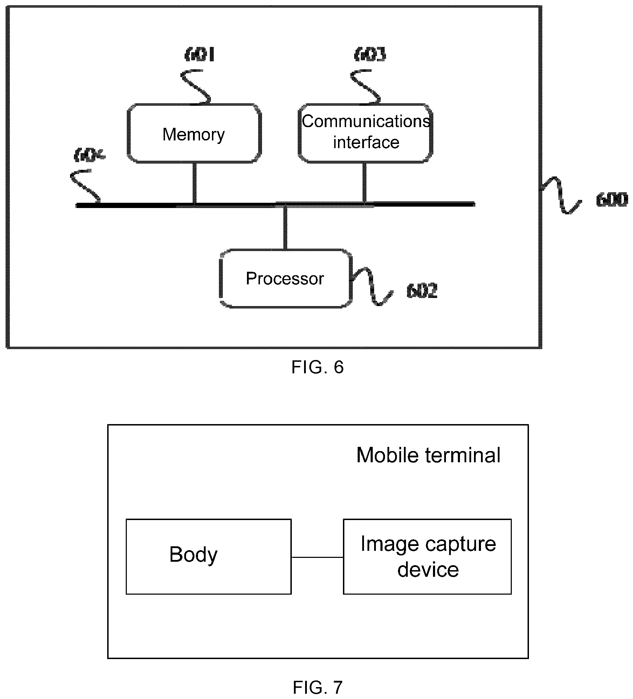

FIG. 6 is a schematic structural diagram of an image capture apparatus according to an embodiment of this application. As shown in FIG. 6, the image capture apparatus 600 includes:

a memory 601, configured to store a computer program; and
a processor 602, configured to execute the computer program, to perform the following operations:
decomposing to-be-processed images, to obtain two or more layers with different frequency bands; determining exposure compensation parameters of each layer, and performing exposure compensation processing on each layer by using the exposure compensation parameters; and performing image reconstruction on the layers on which the exposure compensation processing has been performed, so as to obtain a target image.

Still referring to FIG. 6, optionally, the image capture apparatus may further include a communications interface 603 and a system bus 604. The memory 601 and the communications interface 603 are connected to and communicate with the processor 602 through the system bus 604. The communications interface 603 is configured to communicate with another apparatus.

The system bus mentioned in FIG. 6 may be a peripheral component interconnect (PCI) bus, an extended industry standard architecture (EISA) bus, or the like. The system bus may be classified into an address bus, a data bus, a control bus, and the like. For ease of representation, only one thick line is used to represent the system bus in the figure, but this does not mean that there is only one bus or only one type of bus. The communications interface is configured to implement communication between a database access device and another apparatus (such as a client, a read-write library, or a read-only library). The memory may include a random access memory (RAM), or may further include a non-volatile memory, for example, at least one magnetic disk memory.

The processor may be a general purpose processor, including a central processing unit (CPU), a network processor (NP), or the like; or may be a digital signal processer (DSP), an application-specific integrated circuit (ASIC), a field-programmable gate array (FPGA) or another programmable logic device, a discrete gate or transistor logic device, or a discrete hardware component.

FIG. 7 is a schematic structural diagram of a mobile terminal according to an embodiment of this application. As shown in FIG. 7, the mobile terminal includes a body 701 and an image capture apparatus 702. The image capture apparatus 702 is mounted on the body 701.

The image capture apparatus 702 includes:

a memory 7021, configured to store a computer program; and
a processor 7022, configured to execute the computer program, to perform the following operations:
decomposing to-be-processed images, to obtain two or more layers with different frequency bands; determining exposure compensation parameters of each layer, and performing exposure compensation processing on each layer by using the exposure compensation parameters; and performing image reconstruction based on the layers receiving the exposure compensation processing, so as to obtain a target image.

Optionally, the image capture apparatus may further include a communications interface and a system bus. Connection manners and function descriptions of the communication interface and the system bus are the same as those of the communication interface and the system bus shown in FIG. 6, and reference may be made to the descriptions for FIG. 6. Details will not be described herein again.

In an optional implementation, the mobile terminal may include one or more of an unmanned aerial vehicle, a gimbal, an autonomous vehicle, or a mobile phone.

An embodiment of this application further provides a computer readable storage medium, including a program or an instruction(s). When the program or the instruction(s) is operated on a computer, the following operations are performed:
decomposing to-be-processed images, to obtain two or more layers with different frequency bands; determining exposure compensation parameters of each layer, and performing exposure compensation processing on each layer based on the exposure compensation parameters; and performing image reconstruction based on the layers receiving the exposure compensation processing, so as to obtain a target image.

## Claims

1. An image processing method, **characterized by** comprising:

   decomposing a to-be-processed image to obtain two or more layers with different frequency bands;
   determining exposure compensation parameters of each layer, and performing exposure compensation processing on each layer by using the exposure compensation parameters; and
   performing image reconstruction based on the layers receiving the exposure compensation processing to obtain a target image.

2. The method according to claim 1, **characterized in that**, the to-be-processed image is a plurality of images, every two adjacent of which share an overlapping area.

3. The method according to claim 2, **characterized in that**, the determining of the exposure compensation parameters of each layer includes:

   determining exposure compensation parameters of a first intermediate image and a second intermediate image based on a quantity of pixels in an overlapping area between the first intermediate image and the second intermediate image and average information of pixel values of the overlapping area, wherein
   the first intermediate image and the second intermediate image are any two intermediate images that are in a same layer and share an overlapping area therebetween.

4. The method according to claim 2, **characterized in that**, the determining of the exposure compensation parameters of each layer includes:

determining exposure compensation parameters of a first intermediate image and a second intermediate image based on a quantity of pixels in an overlapping area between the first intermediate image and the second intermediate image, as well as average information, a standard deviation of an error and a standard deviation of a gain of pixel values in the overlapping area, wherein

the first intermediate image and the second intermediate image are any two intermediate images that are in a same layer and share an overlapping area.

5. The method according to claim 3, **characterized in that**, the average information of the pixel values includes a mean Euclidean distance of all pixel values in the overlapping area.

6. The method according to claim 3, **characterized in that**, the average information of the pixel values includes a mean value of all pixel values in the overlapping area.

7. The method according to claim 6, **characterized in that**, the average information of pixel values further includes a standard mean-square error of all the pixel values in the overlapping area.

8. The method according to claim 7, **characterized in that**, the performing of the exposure compensation processing on each layer by using the exposure compensation parameters includes:
performing the exposure compensation processing on each layer by using a first exposure compensation parameter obtained based on the mean value and a second exposure compensation parameter obtained based on the standard mean-square error.

9. The method according to any one of claims 1 to 8, **characterized in that**, the performing of the exposure compensation processing on each layer by using the exposure compensation parameters includes:
processing the exposure compensation parameters to generate gain exposure compensation parameters greater than or equal to 1, and performing the exposure compensation processing on each layer based on the gain exposure compensation parameters.

10. The method according to claim 9, **characterized in that**, the performing of the exposure compensation processing on each layer based on the exposure compensation parameters includes:

determining a smallest exposure compensation parameter among the exposure compensation parameters of all the layers; and
determining the gain exposure compensation parameters of each layer based on ratios of the exposure compensation parameters of each layer to the smallest exposure compensation parameter, and performing the exposure compensation processing on each layer based on the gain exposure compensation parameters.

11. The method according to any one of claims 1 to 10, **characterized in that**, a decomposition manner is specifically a Laplacian decomposition.

12. The method according to any one of claims 1 to 10, **characterized in that**, the layers are two layers.

13. The method according to claim 12, **characterized in that**, the layers include an image direct current component layer and an image alternating current component layer.

14. The method according to any one of claims 2 to 10, **characterized in that**, the performing of the image reconstruction based on the layers receiving the exposure compensation processing includes:
performing the image reconstruction based on the layers receiving the exposure compensation, and then performing image fusion on reconstructed images.

15. The method according to any one of claims 2 to 10, **characterized in that**, the performing of the image reconstruction based on the layers receiving the exposure compensation processing includes:
when multi-band fusion is used in a fusion algorithm, firstly fusing the layers with different frequency bands after exposure processing, and then performing the image reconstruction.

16. The method according to any one of claims 1 to 10, **characterized by** further comprising:
converting the target image from a first bit width to a second bit width, wherein the second bit width is less than the first bit width.

17. The method according to claim 16, **characterized in that**, the converting of the target image from the first bit width to the second bit width includes:
converting the target image from the first bit width to the second bit width through tone mapping.

18. An image processing device, **characterized by** comprising:

a decomposition module, configured to decompose a to-be-processed image to obtain two or more layers with different frequency bands;
a determining module, configured to determine exposure compensation parameters of each layer, and perform exposure compensation processing on each layer by using the exposure compensation parameters; and
a reconstruction module, configured to perform image reconstruction based on the layers receiving the exposure compensation processing to obtain a target image.

19. The device according to claim 18, **characterized in that**, the to-be-processed image is a plurality of images, every two adjacent of which share an overlapping area.

20. The device according to claim 19, **characterized in that**, the determining module is specifically configured to:

determine exposure compensation parameters of a first intermediate image and a second intermediate image based on a quantity of pixels in an overlapping area between the first intermediate image and the second intermediate image and average information of pixel values of the overlapping area, wherein
the first intermediate image and the second intermediate image are any two intermediate images that are in a same layer and share an overlapping area therebetween.

21. The device according to claim 19, **characterized in that**, the determining module is specifically configured to:

determine exposure compensation parameters of a first intermediate image and a second intermediate image based on a quantity of pixels in an overlapping area between the first intermediate image and the second intermediate image, as well as average information, a standard deviation of an error and a standard deviation of a gain of pixel values in the overlapping area, wherein
the first intermediate image and the second intermediate image are any two intermediate images that are in a same layer and share an overlapping area.

22. The device according to claim 20, **characterized in that**, the average information of pixel values includes a mean Euclidean distance of all pixel values in the overlapping area.

23. The device according to claim 20, **characterized in that**, the average information of pixel values includes a mean value of all pixel values in the overlapping area.

24. The device according to claim 23, **characterized in that**, the average information of pixel values further includes a standard mean-square error of all the pixel values in the overlapping area.

25. The device according to claim 24, **characterized in that**, the determining module is specifically configured to:
perform exposure compensation processing on each layer by using a first exposure compensation parameter obtained based on the mean value and a second exposure compensation parameter obtained based on the standard mean-square error.

26. The device according to any one of claims 18 to 25, **characterized in that**, the determining module is specifically configured to:
process the exposure compensation parameters, to generate gain exposure compensation parameters greater than or equal to 1, and perform exposure compensation processing on each layer by using the gain exposure compensation parameters.

27. The device according to claim 26, **characterized in that**, the determining module is specifically configured to:

determine a smallest exposure compensation parameter among the exposure compensation parameters of all the layers; and
determine the gain exposure compensation parameters of each layer based on ratios of the exposure compensation parameters of each layer to the smallest exposure compensation parameter, and perform exposure compensation processing on each layer based on the gain exposure compensation parameters.

28. The device according to any one of claims 18 to 27, **characterized in that**, a decomposition manner is specifically Laplacian decomposition.

29. The device according to any one of claims 18 to 27, **characterized in that**, the layers are two layers.

30. The device according to claim 29, **characterized in that**, the layers include an image direct current component layer and an image alternating current component layer.

31. The device according to any one of claims 19 to 27, **characterized in that**, the reconstruction module is specifically configured to:
    perform the image reconstruction based on the layers receiving the exposure compensation, and then perform image fusion on reconstructed images.

32. The device according to any one of claims 19 to 27, **characterized in that**, the reconstruction module is specifically configured to:
    when multi-band fusion is used in a fusion algorithm, firstly fuse the layers with different frequency bands after exposure processing, and then perform the image reconstruction.

33. The device according to any one of claims 18 to 27, **characterized by** further comprising:
    a conversion module, configured to convert the target image from a first bit width to a second bit width, wherein the second bit width is less than the first bit width.

34. The device according to claim 33, **characterized in that**, the conversion module is specifically configured to:
    convert the target image from the first bit width to the second bit width through tone mapping.

35. An image capture apparatus, **characterized by** comprising:

    a memory, configured to store a computer program; and
    a processor, configured to execute the computer program, to perform the following operations:

    decomposing a to-be-processed image to obtain two or more layers with different frequency bands;
    determining exposure compensation parameters of each layer, and performing exposure compensation processing on each layer by using the exposure compensation parameters; and
    performing image reconstruction based on the layers receiving the exposure compensation processing to obtain a target image.

36. The apparatus according to claim 35, **characterized in that**, the to-be-processed image is a plurality of images, every two adjacent of which share an overlapping area.

37. The apparatus according to claim 36, **characterized in that**, the processor is specifically configured to:

    determine exposure compensation parameters of a first intermediate image and a second intermediate image based on a quantity of pixels in an overlapping area between the first intermediate image and the second intermediate image and average information of pixel values of the overlapping area, wherein
    the first intermediate image and the second intermediate image are any two intermediate images that are in a same layer and share an overlapping area therebetween.

38. The apparatus according to claim 36, **characterized in that**, the processor is specifically configured to:

    determine exposure compensation parameters of a first intermediate image and a second intermediate image based on a quantity of pixels in an overlapping area between the first intermediate image and the second intermediate image, as well as average information, a standard deviation of an error and a standard deviation of a gain of pixel values in the overlapping area, wherein
    the first intermediate image and the second intermediate image are any two intermediate images that are in a same layer and share an overlapping area.

39. The apparatus according to claim 37, **characterized in that**, the average information of pixel values includes a mean Euclidean distance of all pixel values in the overlapping area.

40. The apparatus according to claim 37, **characterized in that**, the average information of pixel values includes a mean value of all pixel values in the overlapping area.

41. The apparatus according to claim 40, **characterized in that**, the average information of pixel values further includes a standard mean-square error of all the pixel values in the overlapping area.

42. The apparatus according to claim 41, **characterized in that**, the processor is specifically configured to:
perform exposure compensation processing on each layer by using a first exposure compensation parameter obtained based on the mean value and a second exposure compensation parameter obtained based on the standard mean-square error.

43. The apparatus according to any one of claims 35 to 42, **characterized in that**, the processor is specifically configured to:
process the exposure compensation parameters, to generate gain exposure compensation parameters greater than or equal to 1, and perform exposure compensation processing on each layer by using the gain exposure compensation parameters.

44. The apparatus according to claim 43, **characterized in that**, the processor is specifically configured to:

determine a smallest exposure compensation parameter among the exposure compensation parameters of all the layers; and
determine the gain exposure compensation parameters of each layer based on ratios of the exposure compensation parameters of each layer to the smallest exposure compensation parameter, and perform exposure compensation processing on each layer by using the gain exposure compensation parameters.

45. The apparatus according to any one of claims 35 to 44, **characterized in that**, a decomposition manner is specifically Laplacian decomposition.

46. The device according to any one of claims 35 to 44, **characterized in that**, the layers are two layers.

47. The apparatus according to claim 46, **characterized in that**, the layers include an image direct current component layer and an image alternating current component layer.

48. The apparatus according to any one of claims 36 to 44, **characterized in that**, the processor is specifically configured to:
perform the image reconstruction based on the layers receiving the exposure compensation, and then perform image fusion on reconstructed images.

49. The apparatus according to any one of claims 36 to 44, **characterized in that**, the processor is specifically configured to:
when multi-band fusion is used in a fusion algorithm, firstly fuse the layers with different frequency bands after exposure processing, and then perform the image reconstruction.

50. The apparatus according to any one of claims 35 to 44, **characterized in that**, the processor is further configured to:
convert the target image from a first bit width to a second bit width, wherein the second bit width is less than the first bit width.

51. The apparatus according to claim 50, **characterized in that**, the processor is specifically configured to:
convert the target image from the first bit width to the second bit width through tone mapping.

52. The apparatus according to any one of claims 35 to 44, **characterized in that**, the apparatus is further configured to perform image registration on images captured from different angles, so as to obtain the to-be-processed image.

53. The apparatus according to claim 52, **characterized in that**, the image registration includes:

separately extracting feature points of the images captured from the different angles; and
performing feature point matching on the feature points of the images captured from the different angles, to obtain the to-be-processed image.

**54.** The apparatus according to claim 52, **characterized in that**, the apparatus is further configured to perform distortion correction on the images to obtain corrected images.

**55.** A mobile terminal, **characterized by** comprising:

a body; and
an image capture apparatus, wherein the image capture apparatus is mounted on the body; and
the image capture apparatus includes:

a memory, configured to store a computer program; and
a processor, configured to execute the computer program, to perform the following operations:

decomposing a to-be-processed image, to obtain two or more layers with different frequency bands;
determining exposure compensation parameters of each layer, and performing exposure compensation processing on each layer by using the exposure compensation parameters; and
performing image reconstruction based on the layers receiving the exposure compensation processing to obtain a target image.

**56.** The mobile terminal according to claim 55, **characterized in that**, the to-be-processed image is a plurality of images, every two adjacent of which share an overlapping area.

**57.** The mobile terminal according to claim 56, **characterized in that**, the processor is specifically configured to:

determine exposure compensation parameters of a first intermediate image and a second intermediate image based on a quantity of pixels in an overlapping area between the first intermediate image and the second intermediate image and average information of pixel values of the overlapping area, wherein
the first intermediate image and the second intermediate image are any two intermediate images that are in a same layer and share an overlapping area therebetween.

**58.** The mobile terminal according to claim 56, **characterized in that**, the processor is specifically configured to:

determine exposure compensation parameters of a first intermediate image and a second intermediate image based on a quantity of pixels in an overlapping area between the first intermediate image and the second intermediate image, as well as average information, a standard deviation of an error and a standard deviation of a gain of pixel values in the overlapping area, wherein
the first intermediate image and the second intermediate image are any two intermediate images that are in a same layer and share an overlapping area.

**59.** The mobile terminal according to claim 57, **characterized in that**, the average information of pixel values includes a mean Euclidean distance of all pixel values in the overlapping area.

**60.** The mobile terminal according to claim 57, **characterized in that**, the average information of pixel values includes a mean value of all pixel values in the overlapping area.

**61.** The mobile terminal according to claim 60, **characterized in that**, the average information of pixel values further includes a standard mean-square error of all the pixel values in the overlapping area.

**62.** The mobile terminal according to claim 61, **characterized in that**, the processor is specifically configured to:
perform exposure compensation processing on each layer by using a first exposure compensation parameter obtained based on the mean value and a second exposure compensation parameter obtained based on the standard mean-square error.

**63.** The mobile terminal according to any one of claims 55 to 62, **characterized in that**, the processor is specifically configured to:

process the exposure compensation parameters, to generate gain exposure compensation parameters greater than or equal to 1, and perform exposure compensation processing on each layer by using the gain exposure compensation parameters.

64. The mobile terminal according to claim 63, **characterized in that**, the processor is specifically configured to:

determine a smallest exposure compensation parameter among the exposure compensation parameters of all the layers; and
determine the gain exposure compensation parameters of each layer based on ratios of the exposure compensation parameters of each layer to the smallest exposure compensation parameter, and perform exposure compensation processing on each layer by using the gain exposure compensation parameters.

65. The mobile terminal according to any one of claims 55 to 64, **characterized in that**, a decomposition manner is specifically Laplacian decomposition.

66. The mobile terminal according to any one of claims 55 to 64, **characterized in that**, the layers are two layers.

67. The mobile terminal according to claim 60, **characterized in that**, the layers include an image direct current component layer and an image alternating current component layer.

68. The mobile terminal according to any one of claims 56 to 64, **characterized in that**, the processor is specifically configured to:
perform the image reconstruction based on the layers receiving the exposure compensation, and then perform image fusion on reconstructed images.

69. The mobile terminal according to any one of claims 56 to 64, **characterized in that**, the processor is specifically configured to:
when multi-band fusion is used in a fusion algorithm, firstly fuse the layers with different frequency bands after exposure processing, and then perform the image reconstruction.

70. The mobile terminal according to any one of claims 55 to 64, **characterized in that**, the processor is further configured to:
convert the target image from a first bit width to a second bit width, wherein the second bit width is less than the first bit width.

71. The mobile terminal according to claim 70, **characterized in that**, the processor is specifically configured to:
convert the target image from the first bit width to the second bit width through tone mapping.

72. The mobile terminal according to any one of claims 55 to 64, **characterized in that**, the apparatus is further configured to perform image registration on images captured from different angles, so as to obtain the to-be-processed image.

73. The mobile terminal according to claim 72, **characterized in that**, the image registration includes:

separately extracting feature points of the images captured from the different angles; and
performing feature point matching on the feature points of the images captured from the different angles, to obtain the to-be-processed image.

74. The mobile terminal according to claim 72, **characterized in that**, the apparatus is further configured to perform distortion correction on the images to obtain corrected images.

75. The mobile terminal according to any one of claims 55 to 64, **characterized in that**, the mobile terminal comprises one or more of an unmanned aerial vehicle, a gimbal, an autonomous vehicle, or a mobile phone.

76. A computer readable storage medium, **characterized by** comprising a program or an instruction, wherein when the program or the instruction is operated on a computer, the following operations are performed:

decomposing a to-be-processed image, to obtain two or more layers with different frequency bands;
determining exposure compensation parameters of each layer, and performing exposure compensation processing on each layer by using the exposure compensation parameters; and
performing image reconstruction based on the layers receiving the exposure compensation processing to obtain a target image.

**77.** The medium according to claim 76, **characterized in that**, the to-be-processed image is a plurality of images, every two adjacent of which share an overlapping area.

**78.** The medium according to claim 77, **characterized in that**, the determining of the exposure compensation parameters of each layer includes:

determining exposure compensation parameters of a first intermediate image and a second intermediate image based on a quantity of pixels in an overlapping area between the first intermediate image and the second intermediate image and average information of pixel values of the overlapping area, wherein
the first intermediate image and the second intermediate image are any two intermediate images that are in a same layer and share an overlapping area therebetween.

**79.** The medium according to claim 77, **characterized in that**, the determining of the exposure compensation parameters of each layer includes:

determining exposure compensation parameters of a first intermediate image and a second intermediate image based on a quantity of pixels in an overlapping area between the first intermediate image and the second intermediate image, as well as average information, a standard deviation of an error and a standard deviation of a gain of pixel values in the overlapping area, wherein
the first intermediate image and the second intermediate image are any two intermediate images that are in a same layer and share an overlapping area.

**80.** The medium according to claim 78, **characterized in that**, the average information of pixel values includes a mean Euclidean distance of all pixel values in the overlapping area.

**81.** The medium according to claim 78, **characterized in that**, the average information of pixel values includes a mean value of all pixel values in the overlapping area.

**82.** The medium according to claim 81, **characterized in that**, the average information of pixel values further includes a standard mean-square error of all the pixel values in the overlapping area.

**83.** The medium according to claim 82, **characterized in that**, the performing of the exposure compensation processing on each layer based on the exposure compensation parameters includes:
performing exposure compensation processing on each layer by using a first exposure compensation parameter obtained based on the mean value and a second exposure compensation parameter obtained based on the standard mean-square error.

**84.** The medium according to any one of claims 76 to 83, **characterized in that**, the performing of the exposure compensation processing on each layer by using the exposure compensation parameters includes:
processing the exposure compensation parameters, to generate gain exposure compensation parameters greater than or equal to 1, and performing exposure compensation processing on each layer by using the gain exposure compensation parameters.

**85.** The medium according to claim 84, **characterized in that**, the performing of the exposure compensation processing on each layer by using the exposure compensation parameters includes:

determining a smallest exposure compensation parameter among the exposure compensation parameters of all the layers; and
determining the gain exposure compensation parameters of each layer based on ratios of the exposure compensation parameters of each layer to the smallest exposure compensation parameter, and performing exposure compensation processing on each layer by using the gain exposure compensation parameters.

**86.** The medium according to any one of claims 76 to 85, **characterized in that**, a decomposition manner is specifically Laplacian decomposition.

**87.** The medium according to any one of claims 76 to 85, **characterized in that**, the layers are two layers.

**88.** The medium according to claim 87, **characterized in that**, the layers include an image direct current component layer and an image alternating current component layer.

**89.** The medium according to any one of claims 77 to 85, **characterized in that**, the performing of the image reconstruction based on the layers receiving the exposure compensation processing includes:
performing the image reconstruction based on the layers receiving the exposure compensation, and then performing image fusion on reconstructed images.

**90.** The medium according to any one of claims 77 to 85, **characterized in that**, the performing of the image reconstruction based on the layers receiving the exposure compensation processing includes:
when multi-band fusion is used in a fusion algorithm, firstly fusing the layers with different frequency bands after exposure processing, and then performing the image reconstruction.

**91.** The medium according to any one of claims 76 to 85, **characterized by** further comprising:
converting the target image from a first bit width to a second bit width, wherein the second bit width is less than the first bit width.

**92.** The medium according to claim 91, **characterized in that**, the converting the target image from a first bit width to a second bit width comprises:
converting the target image from the first bit width to the second bit width through tone mapping.

Decompose a to-be-processed image to obtain two or more layers with different frequency bands

$\ \ S101$

Determine exposure compensation parameters of each layer, and performing exposure compensation processing on each layer by using the exposure compensation parameters

$\ \ S102$

Perform image reconstruction based on the layers receiving the exposure compensation processing to obtain a target image

$\ \ S103$

FIG. 1

Determine a smallest exposure compensation parameter among the exposure compensation parameters in each layer

$\ \ S201$

Determine gain exposure compensation parameters of each layer according to a ratio of the exposure compensation parameters of each layer to the smallest exposure compensation parameter, and perform exposure compensation processing on each layer by using the gain exposure compensation parameters

$\ \ S202$

FIG. 2

Image synthesis

Image registration →To-be-processed image→ Exposure compensation → Image fusion → Tone mapping →Output image

FIG. 3

Decomposition module — Determining module — Reconstruction module

FIG. 4

Decomposition module — Determining module — Reconstruction module — Conversion module

FIG. 5

601
603

Memory

Communications
interface

604

600

Processor

602

FIG. 6

Mobile terminal

Body

Image capture
device

FIG. 7

## INTERNATIONAL SEARCH REPORT

| International application No. |
| --- |
| **PCT/CN2019/100597** |

**A. CLASSIFICATION OF SUBJECT MATTER**

H04N 5/235(2006.01)i

According to International Patent Classification (IPC) or to both national classification and IPC

**B. FIELDS SEARCHED**

Minimum documentation searched (classification system followed by classification symbols)

H04N,G06T

Documentation searched other than minimum documentation to the extent that such documents are included in the fields searched

Electronic data base consulted during the international search (name of data base and, where practicable, search terms used)

CNKI, CNPAT, WPI, EPODOC: 曝光, 参数, 补偿, 增益, 图像, 分层, 频率, 分解, 频段, 金字塔, 拉普拉斯, 重构, 重建, 全景, 重叠, 色调, 位宽, 融合, image, process+, exposure, fusion, multiple, laplac+, decomposition, layer, frequency, compensat+, bit, width, hue, map+, reconstruc+

**C. DOCUMENTS CONSIDERED TO BE RELEVANT**

| Category* | Citation of document, with indication, where appropriate, of the relevant passages | Relevant to claim No. |
| --- | --- | --- |
| Y | CN 104616273 A (UNIVERSITY OF ELECTRONIC SCIENCE AND TECHNOLOGY OF CHINA) 13 May 2015 (2015-05-13) description, paragraphs 3 and 36-87 | 1-92 |
| Y | CN 107172364 A (NUBIA TECHNOLOGY CO., LTD.) 15 September 2017 (2017-09-15) description, paragraphs 64 and 69-147 | 1-92 |
| Y | CN 104125410 A (SHENZHEN INFINOVA LIMITED) 29 October 2014 (2014-10-29) description, paragraphs 43-118 | 2-8, 19-25, 36-42, 56-62, 77-83 |
| A | CN 104835130 A (BEIJING UNION UNIVERSITY) 12 August 2015 (2015-08-12) entire document | 1-92 |
| A | CN 107220953 A (GUANGDONG OPPO MOBILE TELECOMMUNICATIONS CO., LTD.) 29 September 2017 (2017-09-29) entire document | 1-92 |
| A | US 2015097978 A1 (QUALCOMM INC.) 09 April 2015 (2015-04-09) entire document | 1-92 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 March 2020** | **27 March 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/100597** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | US 8774559 B2 (SHARP LABORATORIES OF AMERICA, INC.) 08 July 2014 (2014-07-08) entire document | | 1-92 |

### INTERNATIONAL SEARCH REPORT
Information on patent family members

| | International application No. |
|---|---|
| | **PCT/CN2019/100597** |

| Patent document cited in search report | | | Publication date (day/month/year) | Patent family member(s) | | | Publication date (day/month/year) |
|---|---|---|---|---|---|---|---|
| CN | 104616273 | A | 13 May 2015 | None | | | |
| CN | 107172364 | A | 15 September 2017 | None | | | |
| CN | 104125410 | A | 29 October 2014 | None | | | |
| CN | 104835130 | A | 12 August 2015 | None | | | |
| CN | 107220953 | A | 29 September 2017 | WO | 2018228310 | A1 | 20 December 2018 |
| US | 2015097978 | A1 | 09 April 2015 | None | | | |
| US | 8774559 | B2 | 08 July 2014 | None | | | |

Form PCT/ISA/210 (patent family annex) (January 2015)